# EUROPÄISCHE PATENTSCHRIFT

(11) **EP 0 950 475 B1**
(45) Veröffentlichungstag und Bekanntmachung des Hinweises auf die Patenterteilung: **21.08.2002**
(21) Anmeldenummer: 99106094.8
(22) Anmeldetag: 26.03.1999
(51) Int. Cl.: B25J 15/02

(54) **Fluidbetätigter Greifer**
Fluid actuated gripper
Préhenseur actionné par fluide

(30) Priorität: 16.04.1998 DE 29806798 U
(43) Veröffentlichungstag der Anmeldung: 20.10.1999
(73) Patentinhaber: Festo AG & Co, 73734 Esslingen (DE)
(72) Erfinder: Bellandi, Giuseppe, 25030 Roncadelle (BS) (IT); Maffeis, Giuseppe, 25030 Roncadelle (BS) (IT)
(74) Vertreter: Abel, Martin, Dipl.-Ing.

(56) Entgegenhaltungen:
- US-A- 4 492 400
- US-A- 4 660 877
- US-A- 5 007 796

## Beschreibung

Die Erfindung betrifft einen fluidbetätigten Greifer, mit einem hohlkörperähnlich ausgebildeten Greifergehäuse, an dem ein Lagerkörper festgelegt ist, an dem in einer aus einem oder mehreren Schlitzen bestehenden Schlitzanordnung wenigstens zwei zwischen einer Offenstellung und einer Schließstellung relativ zueinander bewegliche Greifbackenträger gelagert sind, und mit einem zum Bewirken der Bewegung der Greifbackenträger zwischen zwei Stellungen verlagerbaren Betätigungselement, dessen Verlagerung in wenigstens einer Richtung durch Fluidbeaufschlagung eines in einer Kolbenkammer verschieblich geführten Kolbens veranlaßt wird.

Ein Greifer dieser Art, der als sogenannter Winkel-Greifer ausgebildet ist, geht aus dem Prospekt "Greifer - die Handhabung im Griff", Seite 5, der Anmelderin sowie zur Beispiel aus der US-A-4492400 hervor. Dieser enthält ein hohlkörperähnliches Gehäuse, in dem ein Kolben verschiebbar geführt ist und aus dem ein an dem Kolben festgelegtes Betätigungselement herausragt. Stirnseitig an das Greifergehäuse ist ein Lagerkörper angeschraubt, der über in einer Schlitzanordnung verschwenkbar gelagerte, jeweils mit einem auswechselbaren Greifbacken bestückbare Greifbackenträger verfügt. Eine durch Fluidbeaufschlagung des Kolbens hervorgerufene Verlagerung des Betätigungselementes bewirkt ein Verschwenken der Greifbackenträger zwischen einer Offenstellung und einer Schließstellung.

Der bekannte Greifer ist sehr robust und zeichnet sich durch eine zuverlässige Betriebsweise aus. Sein Aufbau ist allerdings noch etwas aufwendig und steht insbesondere einer weiteren Miniaturisierung der Baugröße entgegen.

Es ist die Aufgabe der vorliegenden Erfindung, einen Greifer der eingangs genannten Art zu schaffen, der eine einfachere Herstellung und kompaktere Abmessungen ermöglicht.

Zur Lösung dieser Aufgabe ist vorgesehen, daß der Lagerkörper als Einsatzkörper ausgebildet ist, der patronenartig in einer in axialer Verlängerung der Kolbenkammer angeordneten Aufnahmekammer des Greifergehäuses einsitzt, wobei die Schlitzanordnung seitlich außen von der die Aufnahmekammer begrenzenden Gehäusewand des Greifergehäuses über wenigstens eine Teillänge überlagert wird.

Auf diese Weise liegt ein Greifer vor, der sich durch besonders kompakte Abmessungen auszeichnet und der auf Grund seiner Bauweise sehr kleine Baugrößen ermöglicht, bei denen von einem Mikro-Greifer gesprochen werden kann. Bei der Herstellung können die Greifbackenträger an dem Einsatzkörper vormontiert werden, der anschließend nurmehr nach Art einer Patrone oder Kartusche in die zugeordnete Aufnahmekammer des Greifergehäuses einzustecken ist. Da der Einsatzkörper von der die Aufnahmekammer begrenzenden Gehäusewand über wenigstens eine Teillänge umschlossen wird, ergibt sich eine zuverlässige Querabstützung, was den Einsatz aufwendiger Befestigungsmaßnahmen erübrigt. Es genügt in aller Regel, Maßnahmen zur Sicherung der Axialposition des Einsatzkörpers vorzusehen.

Vorteilhafte Weiterbildungen der Erfindung gehen aus den Unteransprüchen hervor. Eine besonders kompakte Anordnung ergibt sich, wenn die Kolbenkammer nicht in einem separaten Arbeitszylinder vorgesehen ist, sondern als Bestandteil des Greifergehäuses ausgeführt wird und unmittelbar koaxial in die Aufnahmekammer übergeht. Auf diese Weise übernimmt das Greifergehäuse gleichzeitig die Funktion eines Zylindergehäuses.

Besonders günstig im Hinblick auf eine Minimierung der Baugröße wirkt sich auch aus, wenn das Betätigungselement unmittelbar in Baueinheit mit dem Kolben ausgeführt ist.

Bei einer weiteren vorteilhaften Ausgestaltung weist der Einsatzkörper eine zur Kolbenkammer hin offene axiale Ausnehmung auf, in die das Betätigungselement bzw. der Kolben hineinragt, so daß es zusätzlich zur Kolbenkammer zu einer Verschiebeführung und Querabstützung des Betätigungselementes bzw. Kolbens beitragen kann.

Der Einsatzkörper besteht zweckmäßigerweise aus Gleitmaterial mit geringem Reibungskoeffizienten, wobei sich vor allem Kunststoffmaterial oder Messing anbietet. über eine bei der Montage durchgeführte Grundschmierung hinaus ist hier in aller Regel während der Lebensdauer des Greifers keine weitere Nachschmierung mehr erforderlich.

Die Greifbackenträger sind an dem Einsatzkörper zweckmäßigerweise verschwenkbar gelagert. Auf diese Weise läßt sich beispielsweise ein Winkelgreifer realisieren. Die Schwenklagerstellen sind dabei zweckmäßigerweise so am Einsatzkörper vorgesehen, daß sie sich im Innern der Aufnahmekammer befinden und gut vor Verunreinigungen geschützt sind.

Die Schwenklagerung der Greifbackenträger kann über separate Lagerstifte erfolgen, die in Lagerausnehmungen des Einsatzkörpers aufgenommen sind. Dabei ist von Vorteil, daß auf ein festes Einpressen der Lagerstifte verzichtet werden kann, wenn sie von der Gehäusewand der Aufnahmekammer umschlossen werden, die auf diese Weise eine Verliersicherung bewirkt.

Ein besonders montagefreundlicher Aufbau liegt vor, wenn der Einsatzkörper durch Rastverbindungsmittel in der Aufnahmekammer festgelegt ist, so daß auf Schrauben verzichtet werden kann. Dies ermöglicht überdies die Realisierung besonders kleiner Baugrößen.

Alternativ ist allerdings auch eine Schraubverbindung möglich, die insbesondere dann eingesetzt wird, wenn der Greifer hohen Beanspruchungen unterliegt, die durch eine Rastverbindung nicht mit Sicherheit aufgenommen werden können.

Jedenfalls werden die betreffenden Befestigungsmittel zweckmäßigerweise so ausgeführt, daß ihre Kraftrichtung parallel zu den Schwenkachsen der Greifbackenträger verläuft, so daß Verspannungen ausgeschlossen werden können, die die Beweglichkeit der Greifbackenträger beeinträchtigen und einen raschen Verschleiß hervorrufen könnten.

Der Einsatzkörper kann einteilig ausgebildet sein, beispielsweise als einstückiges Kunststoffteil. Vor allem bei etwas größeren Abmessungen empfiehlt sich aber eine mehrteilige Ausführung, wobei der Einsatzkörper im Bereich der Schlitzanordnung längsgeteilt ist und sich aus mehreren längsseits aneinandergesetzten Einsatzelementen zusammensetzt. Diese können vor der Montage in der Aufnahmekammer beispielsweise dadurch zusammengesetzt und zusammengehalten werden, daß sie mit in ihnen ausgebildeten Lagerausnehmungen von entgegengesetzten Seiten her auf die zur Schwenklagerung der Greifbackenträger dienenden Lagerstifte aufgesteckt werden.

Es ist möglich, eine die Greifbackenträger in die Offenstellung oder in die Schließstellung vorspannende Rückstellfedereinrichtung vorzusehen. In diesem Falle genügt es, die den Kolben enthaltende Betätigungseinrichtung einfachwirkend auszubilden, wobei eine Zufuhr von Betätigungsfluid nur zur Veranlassung einer Verschiebebewegung in einer Richtung benötigt wird, da die Rückstellung durch die Rückstellfeder erfolgt. Diese ermöglicht insbesondere auch eine besonders einfache Gestaltung des Greifergehäuses, wenn die Kolbenkammer als Bestandteil derselben ausgeführt ist, da dann zur Fluidbeaufschlagung ein Fluidkanal ausreicht, der auf der der Aufnahmekammer entgegengesetzten Axialseite in die Kolbenkammer einmündet und im übrigen axial im Greifergehäuse verläuft und auf der der Öffnung der Aufnahmekammer entgegengesetzten Rückseite des Greifergehäuses ausmündet.

Der Greifer läßt sich mit verschiedenen Gehäuseformen realisieren und gestattet überdies eine sehr flexible Befestigung an einem zugehörigen Greiferträger, beispielsweise am Abtriebsteil einer Dreh- und/oder Lineareinheit.

Nachfolgend wird die Erfindung anhand der beiliegenden Zeichnung näher erläutert. In dieser zeigen:
- Fig. 1: eine erste Bauform des Greifers in perspektivischer Explosionsdarstellung,
- Fig. 2: den Greifer aus Fig. 1 im zusammengesetzten Zustand im Längsschnitt bei die Schließstellung einnehmenden Greifbackenträgern, wobei der Greifer in der Bauform "normalerweise geschlossen" als Öffner ausgebildet ist,
- Fig. 3: den Greifer aus Fig. 2 im Längsschnitt gemäß Schnittlinie III-III in einer zu den Schwenkachsen parallelen Schnittebene,
- Fig. 4: eine weitere Ausführungsform eines Greifers in einer der Fig. 2 entsprechenden Längsschnittdarstellung, wobei die Greifbackenträger die Offenstellung einnehmen und wobei der Greifer in der Bauform "normalerweise geöffnet" als Schließer ausgebildet ist, und
- Fig. 5 und 6: den Greifer aus Fig. 4 in Seitenansicht zusammen mit im Längsschnitt dargestellten Ausführungsvarianten geeigneter Befestigungseinrichtungen, die eine Befestigung an einem Greiferträger ermöglichen.

Die beispielsgemäßen Greifer werden pneumatisch mit Druckluft betätigt. Sie enthalten jeweils ein Greifergehäuse 11, einen als Lagerkörper für zwei Greifbackenträger 14 dienenden Einsatzkörper 12 und einen zur Betätigung der Greifbackenträger 14 dienenden Kolben 13.

Das Greifergehäuse 11 ist hohlkörperähnlich ausgebildet und hat beim Ausführungsbeispiel eine ein- oder mehrfach abgestufte zylindrische Außengestalt. Es begrenzt einen sich axial erstreckenden Innenraum, der in zwei axial aufeinanderfolgend und zweckmäßigerweise unmittelbar koaxial ineinander übergehende Kammern unterteilt ist, und zwar eine Kolbenkammer 15 und eine Aufnahmekammer 16. Die Aufnahmekammer 16 ist zu einer vorderen Axialseite des Greifergehäuses 11 hin offen. Die Kolbenkammer 15 schließt sich daran zur Rückseite des Greifergehäuses 11 hin an und wird im Bereich der rückwärtigen Axialseite von einer Abschlußwand 30 des Greifergehäuses 11 begrenzt. Der Durchmesser der Aufnahmekammer 16 ist zweckmäßigerweise größer als derjenige der Kolbenkammer 15.

Der Einsatzkörper 12 ist von der vorderen Axialseite her patronenartig in die Aufnahmekammer 16 eingesetzt. Dabei stützt er sich mit einem in der Aufnahmekammer 16 sitzenden Befestigungsabschnitt 31 radial an der die Aufnahmekammer umfangsseitig begrenzenden Gehäusewand 32 des Greifergehäuses 11 ab. Die Aufnahmekammer 16 ist zweckmäßigerweise kreiszylindrisch konturiert, wobei der Befestigungsabschnitt 31 über eine komplementäre Außenkontur verfügt, so daß er in Querrichtung abgestützt wird.

Die Einstecktiefe des Einsatzkörpers 12 wird durch einen am vorderen Endbereich angeordneten, den Befestigungsabschnitt 31 radial überragenden Anschlagbund 12' begrenzt, der an der axial gerichteten Stirnfläche der Gehäusewand 32 anliegt.

Die Greifbackenträger 14 sind in einer Schlitzanordnung 33 des Einsatzkörpers 12 gelagert. Beim Ausführungsbeispiel sind zwei Greifbackenträger 14 vorgesehen, die sich diametral mit Bezug zur Längsachse 34 des Einsatzkörpers 12 bzw. der Aufnahmekammer 16 gegenüberliegen und die gemeinsam in einem einzigen Schlitz 21 des Einsatzkörpers 12 gehalten werden. Dieser Schlitz 21 verläuft diametral, wobei er sowohl zur vorderen Stirnfläche als auch an diametral gegenüberliegenden Stellen zur Seiten- bzw. Umfangsfläche des Einsatzkörpers 12 offen ist.

Da der Einsatzkörper 12 außerdem mit einer zur Rückseite hin offenen, sich ein Stück weit axial erstreckenden koaxialen Ausnehmung 20 versehen ist, ergibt sich eine Unterteilung des Einsatzkörpers 12 in zwei den Schlitz 21 flankierende Einsatzelemente 35, 35', die lediglich im rückseitigen Bereich des Einsatzkörpers 12 durch die Schlitzlänge begrenzende Verbindungsstege 36 miteinander verbunden sind.

In der vorderen Stirnfläche der Einsatzelemente 35, 35' sind beispielsgemäß axiale Vertiefungen 12'' vorgesehen, die die Anbringung eventueller Zusatzteile gestatten.

Im eingesetzten Zustand des Einsatzkörpers 12 werden die seitlichen Öffnungen des Schlitzes 21 von der Gehäusewand 32 über eine Teillänge überlappt und abgedeckt. Der abgedeckte Längenbereich ist dabei derjenige, der im Befestigungsabschnitt 31 verläuft. Auf diese Weise wird ein Eindringen von Verunreinigungen zuverlässig verhindert.

Die beiden Greifbackenträger 14 sind an dem Einsatzkörper 12 verschwenkbar gelagert. Ihre Schwenklagerstellen sind dabei so angeordnet, daß sie sich im Innern der Aufnahmekammer 16 befinden und somit ebenfalls gut vor Verunreinigung geschützt sind.

Beim Ausführungsbeispiel ist zur Lagerung jedes Greifbackenträgers 14 ein separater Lagerstift 24 vorgesehen. Jeder Lagerstift 24 verläuft rechtwinkelig zur Schlitzebene des Schlitzes 21, den er dabei durchquert, wobei er in beidseits des Schlitzes in den Einsatzelementen 35, 35' vorgesehenen Lagerausnehmungen 25 mit seinen Endabschnitten aufgenommen ist.

Es ist nicht notwendigerweise erforderlich, die Lagerstifte 24 in die Lagerausnehmungen 25 axial unbeweglich einzupressen. Die Gehäusewand 32 umschließt die Lagerausnehmungen 25 und somit deren an der Außenumfangsfläche des Befestigungsabschnittes 31 liegenden Öffnungen, so daß sie als Anschlag wirkt, der die Lagerstifte unverlierbar in ihren Lagerausnehmungen 25 zurückhält.

Die Greifbackenträger 14 enthalten jeweils eine Trägerpartie 14'' und eine Beaufschlagungspartie 14', die ausgehend von den durch die Lagerstifte 24 definierten Schwenkachsen 37 in unterschiedliche Richtungen weisen. Beim Ausführungsbeispiel erstrecken sie sich im wesentlichen in entgegengesetzte Richtungen. Die Trägerpartien 14'' ragen an der stirnseitigen Schlitzöffnung aus dem Einsatzkörper 12 heraus, die Beaufschlagungspartien 14' erstrecken sich in Richtung zur Kolbenkammer 15, wobei sie allerdings innerhalb des Einsatzkörpers 12 enden.

An den Trägerpartien 14'' können nach Bedarf geeignete, nicht näher dargestellte Greifbacken lösbar festgelegt werden. Sie werden der gewünschten Greiferfunktion entsprechend ausgewählt. Allerdings wäre es auch denkbar, integral mit den Greifbackenträgern 14 ausgebildete Greifbacken vorzusehen.

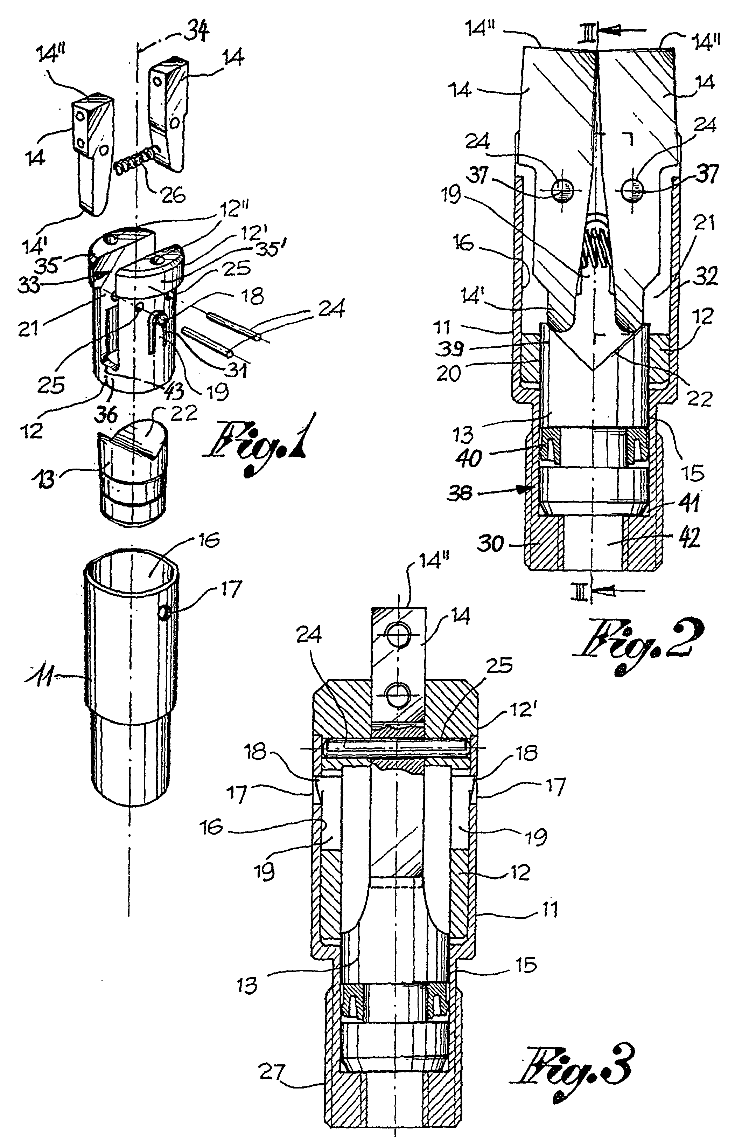

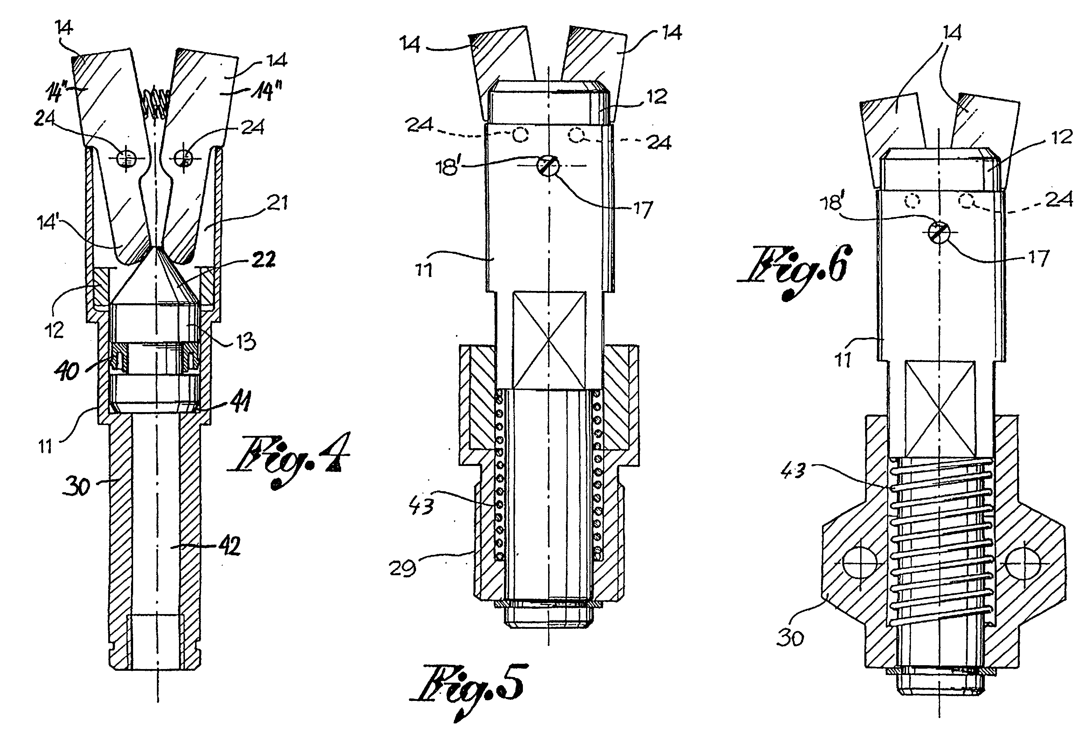

Zwischen den beiden Greifbackenträgern 14 wirkt eine Rückstellfedereinrichtung 26. Sie gibt die Grundstellung der Greifbackenträger 14 vor. Sie ist bei beiden Ausführungsbeispielen von einer Druckfedereinrichtung gebildet, die im Falle des Ausführungsbeispiels gemäß Fig. 1 bis 3 zwischen den beiden Beaufschlagungspartien 14' wirkt und diese in eine normalerweise auseinandergespreizte Position vorspannt. Der hier gezeigte Greifer ist als Öffner ausgebildet, wobei die Trägerpartien 14'' durch die Rückstellfedereinrichtung 26 normalerweise zusammengedrückt werden, so daß die aus Fig. 2 ersichtliche Schließstellung vorliegt.

Alternativ wäre auch eine Bauform als Schließer denkbar, bei der die Greifbackenträger 14 normalerweise, bei unbetätigtem Kolben 13, eine Offenstellung einnehmen. Eine solche Bauform ist in Fig. 4 gezeigt. Hier wirkt die Rückstellfedereinrichtung 26 zwischen den beiden Trägerpartien 14'' und spannt diese in eine auseinandergespreizte Stellung vor.

Das beim Ausführungsbeispiel einstückige Greifergehäuse 11 übernimmt zusätzlich zur Abstützfunktion bezüglich des Einsatzkörpers 12 auch die Funktion eines Zylindergehäuses im Zusammenhang mit der die Bewegung der Greifbackenträger bewirkenden Betätigungseinrichtung 38. Zu dieser Betätigungseinrichtung 38 gehört der Kolben 13, der in der Kolbenkammer 15 axial verschiebbar geführt gelagert ist. Er ragt allerdings axial aus der Kolbenkammer 15 hinaus und in die sich anschließende Ausnehmung 20 des in der Aufnahmekammer 16 fixierten Einsatzkörpers 12 hinein. Dort arbeitet er mit einer stirnseitig angeordneten Betätigungspartie 39 mit den Beaufschlagungspartien 14' der Greifbackenträger 14 zusammen. Somit bildet der Kolben 13 gleichzeitig ein Betätigungselement zum Hervorrufen der Schwenkbewegungen der Greifbackenträger 14.

In der aus Fig. 2 bis 4 hervorgehenden Ausgangsstellung ist der Kolben weitestmöglich in die Kolbenkammer 15 eingefahren und an die rückwärtige Axialseite des Greifergehäuses 11 angenähert. Diese Ausgangsstellung wird durch die unter Federkraft stehenden Beaufschlagungspartien 14' vorgegeben, die durch Kontakt mit der Betätigungspartie 39 ein Zurückdrücken des Kolbens 13 bewirken.

Eine im Bereich des Außenumfanges des Kolbens 13 vorgesehene ringförmige Dichtung 40 liegt dichtend und axial verschieblich an der Umfangsfläche der Kolbenkammer 15 an und sorgt für eine fluiddichte Abtrennung einer Fluidbeaufschlagungskammer 41 axial zwischen dem Kolben 13 und der rückwärtigen Abschlußwand 30. Diese Abschlußwand 30 wird in koaxialer Verlängerung der Kolbenkammer 15 von einem Fluidkanal 42 durchsetzt, der an eine Druckquelle anschließbar ist und die Zufuhr eines beim Ausführungsbeispiel pneumatischen Druckmediums ermöglicht. Dieses Druckmedium ist in der Lage, den Kolben 13 in Richtung zur Aufnahmekammer 16 zu verschieben, wobei er mit seiner Betätigungspartie 39 so auf die Beaufschlagungspartien 14' einwirkt, daß die Greifbackenträger 14 aus der zuvor eingenommenen Offen- oder Schließstellung in die Schließ- bzw. Offenstellung bewegt werden. Um eine Rückstellung zu bewirken, genügt es, die Fluidbeaufschlagungskammer 41 zu entlüften.

Von Vorteil beim Ausführungsbeispiel ist, daß die axiale Ausnehmung 20 mit ihrem der Kolbenkammer 15 zugewandten Endbereich eine Führungsfunktion in bezug auf den Kolben 13 übernimmt. Ihre Innenumfangsfläche ist als Führungsfläche ausgeführt, die den Kolben 13 umschließt, so daß dieser in Querrichtung abgestützt wird. Da somit auch außerhalb der Kolbenkammer 15 eine Querabstützung des Kolbens 13 erfolgt, liegt eine sich verschleißmindernd auswirkende zuverlässige Führung vor.

Beim Ausführungsbeispiel wirkt die Betätigungspartie 39 mit schräg zur Verlagerungsrichtung des Kolbens 13 verlaufenden Betätigungsflächen 22 auf die Beaufschlagungspartien 14' ein. Diese Betätigungsflächen 22 sind beim Ausführungsbeispiel gemäß Fig. 1 bis 3 nach Art eines Innenkonus und im Falle des Ausführungsbeispiels der Fig. 4 nach Art eines Außenkonus gestaltet, wobei sie die Beaufschlagungspartien 14' bei axialer Verlagerung im einen Falle von außen her und im anderen Falle von innen her beaufschlagen, um ein Zusammendrücken oder Aufspreizen hervorzurufen. Es muß sich nicht notwendigerweise um kegelähnlich gestaltete Betätigungsflächen 22 handeln, es genügen im Prinzip vergleichbar der aus Fig. 1 ersichtlichen Anordnung zwei sich unter einem gewünschten Schrägwinkel gegenüberliegende Betätigungsflächen 22.

Vorteilhafterweise besteht der Einsatzkörper 12 aus Kunststoffmaterial, das sich durch gute Gleiteigenschaften auszeichnet. Alternativ wäre auch Messing oder ein anderes Gleitmaterial denkbar. Das Greifergehäuse 11 besteht zweckmäßigerweise aus Metall wie Stahl oder Aluminiummaterial.

Da der Einsatzkörper 12 von der ihn umschließenden Gehäusewand 32 allseits radial abgestützt wird, kann auf diesbezügliche spezielle zusätzliche Befestigungsmaßnahmen verzichtet werden. Es genügt im wesentlichen, dafür zu sorgen, daß der Einsatzkörper 12 axial unverschieblich in der Aufnahmekammer 16 festgelegt ist. Beim Ausführungsbeispiel der Fig. 1 bis 3 erfolgt dies unter Verwendung geeigneter Rastverbindungsmittel.

Hierzu ist beim Ausführungsbeispiel die die Aufnahmekammer 16 begrenzende Gehäusewand 32 seitlich mit Vertiefungen oder, wie vorliegend, mit Löchern versehen, die als Rastausnehmungen 17 fungieren. In diese greifen gegenüberliegend seitlich im Bereich des Außenumfanges des Einsatzkörpers 12 vorgesehene Rastvorsprünge 18 ein. Diese Rastvorsprünge 18 sind zweckmäßigerweise einstückig mit dem Einsatzkörper 12 verbunden und werden beim Ausführungsbeispiel von federelastischen Zungen 19 getragen, die aus der Wand der Einsatzelemente 35, 35' ausgespart sind.

Alternativ können auch Schraubverbindungsmittel zum Einsatz kommen, wie sie exemplarisch in Fig. 5 und 6 angedeutet sind. Demnach können Befestigungsschrauben 18' vorgesehen sein, die die Gehäusewand 32 von außen her durchsetzen und im Einsatzkörper 12 verankert sind.

In allen Fällen werden die Befestigungsmaßnahmen zweckmäßigerweise so ausgeführt, daß ihre Kraftrichtung parallel zu den Schwenkachsen 37 bzw. den Lagerstiften 24 verläuft, so daß die Bewegungsfähigkeit der Greifbackenträger 14 beeinträchtigende Verklemmungen ausgeschlossen werden können.

Der Einsatzkörper 12 ist bei den Ausführungsbeispielen als einteiliges, einstückiges Bauteil ausgeführt. Alternativ hierzu ist auch eine mehrteilige Bauform möglich, bei der der Einsatzkörper 12 zweckmäßigerweise im Bereich seines diametral verlaufenden Schlitzes 21 längsgeteilt ist. In Fig. 1 ist bei 43 strichpunktiert eine dann die Verbindungsstege 36 durchsetzende Teilungsebene angedeutet, welche bewirkt, daß der Einsatzkörper 12 aus zwei separaten, längsseits aneinandergesetzten Einsatzelementen 35, 35' besteht. Die beiden Einsatzelemente 35, 35' sind dann zweckmäßigerweise spiegelsymmetrisch bezüglich der Teilungsebene 43 ausgeführt und sind identisch gestaltet.

Um der aus dem Einsatzkörper 12 und den Greifbackenträgern 14 zusammengesetzten Baueinheit vor der Montage in der Aufnahmekammer 16 einen ausreichenden Zusammenhalt zu verleihen, sind die Querschnittsabmessungen der Lagerstifte 24 und der Lagerausnehmungen 25 zweckmäßigerweise so aufeinander abgestimmt, daß die Lagerstifte 24 mit einer gewissen Vorspannung in den Lagerausnehmungen 25 einsitzen und auf diese Weise in Achsrichtung der Lagerstifte 24 relativ zueinander eine Vorfixierung erfolgt. Schließlich sei noch darauf hingewiesen, daß am Greifergehäuse 11 geeignete Befestigungsmittel vorgesehen sein können, die eine starre und/oder eine federelastisch nachgiebige Befestigung an einem geeigneten Greiferträger ermöglichen. Im Falle der Bauform gemäß Fig. 2 und 3 verfügt das Greifergehäuse 11 über Befestigungsmittel in Gestalt eines Außengewindes 27. Andere Möglichkeiten zeigen die Fig. 5 und 6, bei denen auf dem Greifergehäuse 11 hülsenartige Befestigungsmitteln 29, 30 sitzen, die gegebenenfalls axial verschiebbar und unter Federvorspannung 43 stehend angeordnet sein können, um bei der Handhabung von Gegenständen einen selbsttätigen Längenausgleich zu ermöglichen.

Schließlich ist noch nachzutragen, daß der Greifer mit geeigneten Sensormitteln ausgestattet sein kann, die eine Erfassung einer oder mehrerer Stellungen der Greifbackenträger ermöglichen, um den Greifer in ein System mit automatischem Betriebsablauf integrieren zu können.

## Patentansprüche

1. Fluidbetätigter Greifer, mit einem hohlkörperähnlich ausgebildeten Greifergehäuse (11), an dem ein Lagerkörper festgelegt ist, an dem in einer aus einem oder mehreren Schlitzen (21) bestehenden Schlitzanordnung (33) wenigstens zwei zwischen einer Offenstellung und einer Schließstellung relativ zueinander bewegliche Greifbackenträger (14) gelagert sind, und mit einem zum Bewirken der Bewegung der Greifbackenträger (14) zwischen zwei Stellungen verlagerbaren Betätigungselement, dessen Verlagerung in wenigstens einer Richtung durch Fluidbeaufschlagung eines in einer Kolbenkammer (15) verschieblich geführten Kolbens (13) veranlaßt wird, **dadurch gekennzeichnet, daß** der Lagerkörper als Einsatzkörper (12) ausgebildet ist, der patronenartig in einer in axialer Verlängerung der Kolbenkammer (15) angeordneten Aufnahmekammer (16) des Greifergehäuses (11) einsitzt, wobei die Schlitzanordnung (33) seitlich außen von der die Aufnahmekammer (16) begrenzenden Gehäusewand (32) des Greifergehäuses (11) über wenigstens eine Teillänge überlagert wird.

2. Greifer nach Anspruch 1, **dadurch gekennzeichnet, daß** die Aufnahmekammer (16) und zumindest der in dieser einsitzende Längenabschnitt des Einsatzkörpers (12) eine im wesentlichen zylindrische Gestalt aufweisen.

3. Greifer nach Anspruch 1 oder 2, **dadurch gekennzeichnet, daß** die Kolbenkammer (15) Bestandteil des Greifergehäuses (11) ist und dort unmittelbar koaxial in die Aufnahmekammer (16) übergeht.

4. Greifer nach einem der Ansprüche 1 bis 3, **dadurch gekennzeichnet, daß** das Betätigungselement unmittelbar von dem Kolben (13) gebildet ist.

5. Greifer nach einem der Ansprüche 1 bis 4, **dadurch gekennzeichnet, daß** der Einsatzkörper (12) eine zur Kolbenkammer (15) hin offene axiale Ausnehmung (20) aufweist, in die das Betätigungselement (13) hineinragt, wo es zum Bewegen der Greifbackenträger (14) mit an diesen vorgesehenen Beaufschlagungspartien (14') zusammenarbeitet.

6. Greifer nach Anspruch 5, **dadurch gekennzeichnet, daß** die axiale Ausnehmung (20) mit ihrem der Kolbenkammer (15) zugewandten Endbereich zur Verschiebeführung des Betätigungselementes bzw. Kolbens (13) dient.

7. Greifer nach einem der Ansprüche 1 bis 6, **dadurch gekennzeichnet, daß** der Einsatzkörper (12) aus Kunststoffmaterial, Messing oder einem anderen Material mit guten Gleiteigenschaften besteht.

8. Greifer nach einem der Ansprüche 1 bis 7, **dadurch gekennzeichnet, daß** die Greifbackenträger (14) an dem Einsatzkörper (12) verschwenkbar gelagert sind, wobei sich die Schwenklagerstellen zweckmäßigerweise im Innern der Aufnahmekammer (16) befinden.

9. Greifer nach Anspruch 8, **dadurch gekennzeichnet, daß** jeder Greifbackenträger (14) verschwenkbar auf einem Lagerstift (24) sitzt, der den zugeordneten Schlitz (21) durchquert und in Lagerausnehmungen (25) der den Schlitz (21) beidseits flankierenden Abschnitte des Einsatzkörpers (12) aufgenommen ist.

10. Greifer nach Anspruch 9, **dadurch gekennzeichnet, daß** die Position der Lagerstifte (24) am Einsatzkörper (12) derart gewählt ist, daß sie sich im Innern der Aufnahmekammer befinden und unter Bewirkung einer Verliersicherung von der Gehäusewand (32) der Aufnahmekammer (16) umschlossen werden.

11. Greifer nach einem der Ansprüche 1 bis 10, **dadurch gekennzeichnet, daß** der Einsatzkörper (12) durch Rastverbindungsmittel (17, 18) in der Aufnahmekammer (16) festgelegt ist.

12. Greifer nach Anspruch 11, **dadurch gekennzeichnet, daß** die die Aufnahmekammer (16) begrenzende Gehäusewand (32) seitlich über von Löchern oder Vertiefungen gebildete Rastausnehmungen (17) verfügt, in die seitlich im Bereich des Außenumfanges des Einsatzkörpers (12) vorgesehene Rastvorsprünge (18) eingreifen.

13. Greifer nach Anspruch 12, **dadurch gekennzeichnet, daß** die Rastvorsprünge (18) an einstückig mit dem Einsatzkörper (12) ausgebildeten federelastischen Zungen vorgesehen sind.

14. Greifer nach einem der Ansprüche 1 bis 10, **dadurch gekennzeichnet, daß** der Einsatzkörper (12) durch quer zu seiner Längsachse (34) verlaufende Schraubmittel (18') am Greifergehäuse (11) festgelegt ist.

15. Greifer nach einem der Ansprüche 11 bis 14 in Verbindung mit Anspruch 8 oder 9, **dadurch gekennzeichnet, daß** die Kraftrichtung der zur gehäusefesten Fixierung des Einsatzkörpers (12) dienenden Befestigungsmittel (17, 18, 18') parallel zu den Schwenkachsen (37) der Greifbackenträger (14) verläuft.

16. Greifer nach einem der Ansprüche 1 bis 15, **dadurch gekennzeichnet, daß** die Schlitzanordnung (33) einen den Einsatzkörper (12) diametral durchsetzenden Schlitz (21) aufweist, in dem zwei sich gegenüberliegende Greifbackenträger (14) gelagert sind.

17. Greifer nach Anspruch 16, **dadurch gekennzeichnet, daß** der Einsatzkörper (12) im Bereich des Schlitzes (21) längsgeteilt ausgeführt ist.

18. Greifer nach einem der Ansprüche 1 bis 16, **dadurch gekennzeichnet, daß** der Einsatzkörper (12) einteilig ausgeführt ist.

19. Greifer nach einem der Ansprüche 1 bis 18, **dadurch gekennzeichnet, daß** am Greifergehäuse (11) Befestigungsmittel (27, 29, 30, 31) vorgesehen sind, die eine starre und/oder federelastisch nachgiebige Befestigung an einem Greiferträger ermöglichen.

20. Greifer nach einem der Ansprüche 1 bis 19, **dadurch gekennzeichnet, daß** die Greifbackenträger (14) zur lösbaren Befestigung von Greifbacken ausgebildet sind.

21. Greifer nach einem der Ansprüche 1 bis 20, **dadurch gekennzeichnet, daß** eine die Greifbackenträger (14) in die Offenstellung oder in die Schließstellung vorspannende Rückstellfedereinrichtung (26) vorhanden ist.

22. Greifer nach einem der Ansprüche 1 bis 21, **dadurch gekennzeichnet, daß** das Betätigungselement (13) mit schräg zu seiner Verlagerungsrichtung verlaufenden Betätigungsflächen (22) mit den Greifbackenträger (14) zusammenarbeitet.

## Claims

1. Fluid-operated gripper with a gripper housing (11) resembling a hollow body, to which a mounting body supporting, in a slot arrangement (33) consisting of one or more slots (21), at least two gripper jaw carriers (14) capable of moving relative to each other between an open position and a closed position is fixed, and with an actuating element capable of movement between two positions to effect the movement of the gripper jaw carriers (14), its movement being, at least in one direction, caused by the admission of fluid to a piston (13) guided in a piston chamber (15), **characterised in that** the mounting body is designed as an insert body (12) located in the manner of a cartridge in a locating chamber (16) of the gripper housing (11) provided in an axial extension of the piston chamber (15), the slot arrangement (33) being at least for part of its length superimposed laterally on the outside by the housing wall (32) of the gripper housing (11) bounding the locating chamber (16).

2. Gripper according to claim 1, **characterised in that** the locating chamber (16) and at least the section of the insert body (12) located therein have a substantially cylindrical shape.

3. Gripper according to claim 1 or 2, **characterised in that** the piston chamber (15) forms part of the gripper housing (11) with a direct coaxial transition to the locating chamber (16).

4. Gripper according to any of claims 1 to 3, **characterised in that** the actuating element is represented by the piston (13) itself.

5. Gripper according to any of claims 1 to 4, **characterised in that** the insert body (12) has an axial recess (20) open towards the piston chamber (15), into which the actuating element (13) projects to act together with pressurising sections (14') provided on and moving the gripper jaw carriers (14).

6. Gripper according to claim 5, **characterised in that** the axial recess (20) is provided for the guided movement of the actuating element or piston (13) with its end area facing the piston chamber (15).

7. Gripper according to any of claims 1 to 6, **characterised in that** the insert body (12) is made of a plastic material, brass or another material with good sliding properties.

8. Gripper according to any of claims 1 to 7, **characterised in that** the gripper jaw carriers (14) are pivoted on the insert body (12), the pivoting points lying expediently within the locating chamber (16).

9. Gripper according to claim 8, **characterised in that** each gripper jaw carrier (14) is pivoted on a bearing pin (24) passing through the associated slot (21) and held in bearing recesses (25) of the sections of the insert body (12) which flank the slot (21) on both sides.

10. Gripper according to claim 9, **characterised in that** the position of the bearing pins (24) on the insert body (12) is so chosen that they are within the locating chamber and enclosed by the housing wall (32) of the locating chamber (16) to protect them against loss.

11. Gripper according to any of claims 1 to 10, **characterised in that** the insert body (12) is located in the locating chamber (16) by locking means (17, 18).

12. Gripper according to claim 11, **characterised in that** the sides of the housing wall (32) bounding the locating chamber (16) are provided with locking recesses (17) in the form of holes or indentations which are engaged by locking projections (18) provided laterally in the area of the outer circumference of the insert body (12).

13. Gripper according to claim 12, **characterised in that** the locking projections (18) are located on spring-loaded tabs integral with the insert body (12).

14. Gripper according to any of claims 1 to 10, **characterised in that** the insert body (12) is fixed to the gripper housing (11) by means of screw elements (18') extending at right angles to its longitudinal axis (34).

15. Gripper according to any of claims 1 to 14 in connection with claim 8 or 9, **characterised in that** the direction of the force exerted by the retaining means (17, 18, 18') used to fix the insert body (12) to the housing is parallel to the swivel axes (37) of the gripper jaw carriers (14).

16. Gripper according to any of claims 1 to 15, **characterised in that** the slot arrangement (33) comprises a slot (21) passing diametrically through the insert body (12), in which two opposing gripper jaw carriers (14) are supported.

17. Gripper according to claim 16, **characterised in that** the insert body (12) is longitudinally divided in the area of the slot (21).

18. Gripper according to any of claims 1 to 16, **characterised in that** the insert body (12) forms a single part.

19. Gripper according to any of claims 1 to 18, **characterised in that** the gripper housing (11) is fitted with retaining means (27, 29, 30, 31) permitting the rigid and/or spring-loaded, flexible mounting on a gripper carrier.

20. Gripper according to any of claims 1 to 19, **characterised in that** the gripper jaw carriers (14) are designed for the detachable mounting of gripper jaws.

21. Gripper according to any of claims 1 to 20, **characterised in that** a return spring device (26) is provided to pre-load the gripper jaw carriers (14) in the open or closed position.

22. Gripper according to any of claims 1 to 21, **characterised in that** the actuating element (13) acts together with the gripper jaw carriers (14) by means of actuating surfaces (22) extending at an angle to its direction of displacement.

## Revendications

1. Préhenseur actionné au moyen d'un fluide, comportant un boîtier de préhenseur (11) de type corps creux auquel est fixé un corps de palier sur lequel sont montés, dans un ensemble de fentes (33) constitué d'une ou de plusieurs fentes (21), au moins deux supports de mâchoire de pince (14) déplaçables l'un par rapport à l'autre entre une position ouverte et une position fermée, et comportant, pour activer le mouvement des supports de mâchoire de pince (14), un élément d'actionnement déplaçable entre deux positions, dont le déplacement dans au moins un sens est provoqué par l'action d'un fluide sur un piston (13) monté coulissant dans une chambre de piston (15), **caractérisé en ce que** le corps de palier est réalisé en tant que corps à insérer (12) qui, à la manière d'une cartouche, s'insère dans une chambre de réception (16) du boîtier de préhenseur (11), disposée dans le prolongement axial de la chambre de piston (15), l'ensemble de fentes (33) étant superposé, sur au moins une partie de sa longueur, sur le côté extérieur, par la paroi de boîtier (32), délimitant la chambre de réception (16), du boîtier de préhenseur (11).

2. Préhenseur selon la revendication 1, **caractérisé en ce que** la chambre de réception (16) et au moins la fraction de longueur, insérée dans celle-ci, du corps à insérer (12), présentent une forme sensiblement cylindrique.

3. Préhenseur selon la revendication 1 ou 2, **caractérisé en ce que** la chambre de piston (15) fait partie intégrante du boîtier de préhenseur (11) et se prolonge à cet endroit directement coaxialement dans la chambre de réception (16).

4. Préhenseur selon l'une des revendications 1 à 3, **caractérisé en ce que** l'élément d'actionnement est directement formé par le piston (13).

5. Préhenseur selon l'une des revendications 1 à 4, **caractérisé en ce que** le corps à insérer (12) présente un évidement axial (20), ouvert vers la chambre de piston (15), dans lequel s'engage l'élément d'actionnement (13), où il coopère avec des parties d'actionnement (14') prévues sur les supports de mâchoire de pince (14), pour le déplacement de ceux-ci.

6. Préhenseur selon la revendication 5, **caractérisé en ce que** l'évidement axial (20) sert, par sa zone terminale tournée vers la chambre de piston (15), au guidage en coulissement de l'élément d'actionnement, respectivement du piston (13).

7. Préhenseur selon l'une des revendications 1 à 6, **caractérisé en ce que** le corps à insérer (12) est en matière synthétique, en laiton ou en une autre matière possédant de bonnes propriétés de glissement.

8. Préhenseur selon l'une des revendications 1 à 7, **caractérisé en ce que** les supports de mâchoire de pince (14) sont montés sur le corps à insérer (12) de manière à pouvoir pivoter, les emplacements des paliers de pivotement se trouvant avantageusement à l'intérieur de la chambre de réception (16).

9. Préhenseur selon la revendication 8, **caractérisé en ce que** chaque support de mâchoire de pince (14) est monté, de manière à pouvoir pivoter, sur un axe de palier (24) qui traverse la fente (21) associée et qui est logé dans des évidements de palier (25) des parties du corps à insérer (12) qui bordent la fente (21) sur ses deux côtés.

10. Préhenseur selon la revendication 9, **caractérisé en ce que** la position des axes de palier (24) sur le corps à insérer (12) est choisie de manière qu'ils se trouvent à l'intérieur de la chambre de réception et qu'ils soient entourés par la paroi de boîtier (32) de la chambre de réception (16), avec obtention d'une protection contre la perte.

11. Préhenseur selon l'une des revendications 1 à 10, **caractérisé en ce que** le corps à insérer (12) est fixé dans la chambre de réception (16) par des moyens de liaison par encliquetage (17, 18).

12. Préhenseur selon la revendication 11, **caractérisé en ce que** la paroi de boîtier (32), qui délimite la chambre de réception (16), dispose sur le côté d'évidements d'encliquetage (17), formés par des trous ou des renfoncements, dans lesquels s'engagent des saillies d'encliquetage (18) prévues sur le côté de la zone du pourtour extérieur du corps à insérer (12).

13. Préhenseur selon la revendication 12, **caractérisé en ce que** les saillies d'encliquetage (18) sont prévues sur des languettes élastiques réalisées d'un seul tenant avec le corps à insérer (12).

14. Préhenseur selon l'une des revendications 1 à 10, **caractérisé en ce que** le corps à insérer (12) est fixé sur le boîtier de préhenseur (11) par des moyens à vis (18') s'étendant transversalement à son axe longitudinal (34).

15. Préhenseur selon l'une des revendications 11 à 14, en combinaison avec la revendication 8 ou 9, **caractérisé en ce que** le sens de la force des moyens de fixation (17, 18, 18'), servant à la fixation, solidairement avec le boîtier, du corps à insérer (12), est parallèle aux axes de pivotement (37) des supports de mâchoire de pince (14).

16. Préhenseur selon l'une des revendications 1 à 15, **caractérisé en ce que** l'ensemble de fentes (33) présente une fente (21) traversant diamétralement le corps à insérer (12), fente dans laquelle sont montés deux supports de mâchoire de pince (14) se faisant face.

17. Préhenseur selon la revendication 16, **caractérisé en ce que** le corps à insérer (12) est divisé longitudinalement dans la zone de la fente (21).

18. Préhenseur selon l'une des revendications 1 à 16, **caractérisé en ce que** le corps à insérer (12) est réalisé d'un seul tenant.

19. Préhenseur selon l'une des revendications 1 à 18, **caractérisé en ce que** sur le boîtier de préhenseur (11) sont prévus des moyens de fixation (27, 29, 30, 31) qui permettent une fixation rigide et/ou élastiquement souple à un support de préhenseur.

20. Préhenseur selon l'une des revendications 1 à 19, **caractérisé en ce que** les supports de mâchoire de pince (14) sont conformés pour la fixation non permanente de mâchoires de pince.

21. Préhenseur selon l'une des revendications 1 à 20, **caractérisé en ce qu'**il est prévu un dispositif à ressort de rappel (26) qui précontraint les supports de mâchoire de pince (14) dans leur position ouverte ou dans leur position fermée.

22. Préhenseur selon l'une des revendications 1 à 21, **caractérisé en ce que** l'élément d'actionnement (13) coopère, par des surfaces d'actionnement (22) s'étendant obliquement par rapport à sa direction de déplacement, avec les supports de mâchoire de pince (14).
